Europäisches Patentamt

European Patent Office

Office européen des brevets

(19)

(11) Publication number: **0 109 263**
A1

(12) EUROPEAN PATENT APPLICATION

(21) Application number: 83306845.5

(22) Date of filing: 09.11.83

(51) Int. Cl.³: **B 65 D 51/00**

(30) Priority: 09.11.82 GB 8231968

(43) Date of publication of application: 23.05.84
Bulletin 84/21

(84) Designated Contracting States: DE FR IT

(71) Applicant: AUTOSAFE LIMITED, Trinity Road, Richmond
Surrey, TW9 2LG (GB)

(72) Inventor: Evans, Richard John Rees, 33 Copthall Road
East, Ickendam Middlesex UB10 8L (GB)

(74) Representative: Bayliss, Geoffrey Cyril et al, BOULT,
WADE & TENNANT 27 Furnival Street, London EC4A 1PQ
(GB)

(54) Pipe closures, for example vehicle fuel filler caps.

(57) A pipe closure (10) is adapted to fit a flanged pipe end. The closure comprises a knob (12) having a spigot (14) on which a locking member (34) is mounted for axial sliding. An intermediate member (16) is rotatably mounted on the spigot (14) between the knob (12) and the locking member (34). The locking member (34) and intermediate member (16) are separated by an over-centre mechanism, provided by three pins (40), and are urged together by a spring (46). Pairs of projections (32, 48) are provided on the intermediate member (16) and the locking member (34). In one relative position, the projections (32, 48) are aligned and can be passed through a cut-away in the flanged pipe end. Upon rotation of the knob (12), the over-centre mechanism operates to move the projections (48) behind the flange, the spring (46) urging the projections (48) against the flange to pull a seal (22) against the flange.

## PIPE CLOSURES, FOR EXAMPLE VEHICLE FUEL FILLER CAPS

This invention relates to closures for flanged pipe ends.

A known such closure, for example a vehicle fuel filler cap, comprises a seal to engage the pipe end, a member to extend into the pipe end, and a pair of projections extending radially outwardly from the member. When the closure is fitted to the pipe end, the projections are passed through a pair of cut-aways in the flanged end and then the closure is twisted so that the projections move behind the flange. The flange has a cam surface adjacent each cut-away against which the respective projection bears with more force as the closure is twisted to pull the seal against the pipe end.

According to the present invention, there is provided a closure for a flanged pipe end with at least two cut-aways in the flange, the closure including two members which are relatively rotatable and are movable towards and away from each other along the axis of rotation, means to bias the members towards each other, means to force the members apart against the biasing means upon rotation of the members from a first relative position, and means to hold the members in a second position of relative rotation, one of the members being provided with sealing means engageable with the pipe end and having means to register said one member with the pipe end, and the other member having at least two projections arranged so that upon offering up the closure to the pipe end with the members in said second relative position the two projections can pass through the two cut-aways and the registering means engages the pipe end, and so that upon subsequent rotation of said other member the projections move behind the flange and the members move towards each other under the action of the biasing means as the members approach said first relative position so that the projections engage and are urged against the flange and the sealing means is urged against the pipe end.

An advantage of the closure according to the invention is that it may be fitted to the pipe end more easily than the known closure because the projections forcefully engage the flange only towards the end of the locking movement from the second relative position to the first relative position, and the biasing means is at that stage assisting the locking movement. Furthermore, the closure may be removed more easily, because during removal the locking projections are initially forced away from the flange. Additionally, the closure according to the invention does not require camming surfaces adjacent the pipe flange cut-aways in order to provide a good seal.

A specific embodiment of the present invention will now be described by way of example with reference to the accompanying drawings in which:

Figure 1 is a half-section side view of a vehicle fuel filler cap in a "centre" position;

Figure 2 is under-plan view of the filler cap shown in Figure 1;

Figure 3 is schematic view in the direction III shown in Figure 1 showing the positions of a pin in the over-centre connection and the pin's associated recesses in an unlocked position (full line) and a locked position (chain dot line); and

Figure 4 is longitudinally-sectioned perspective view of a pipe end with which the filler cap of Figures 1 and 2 is to be used.

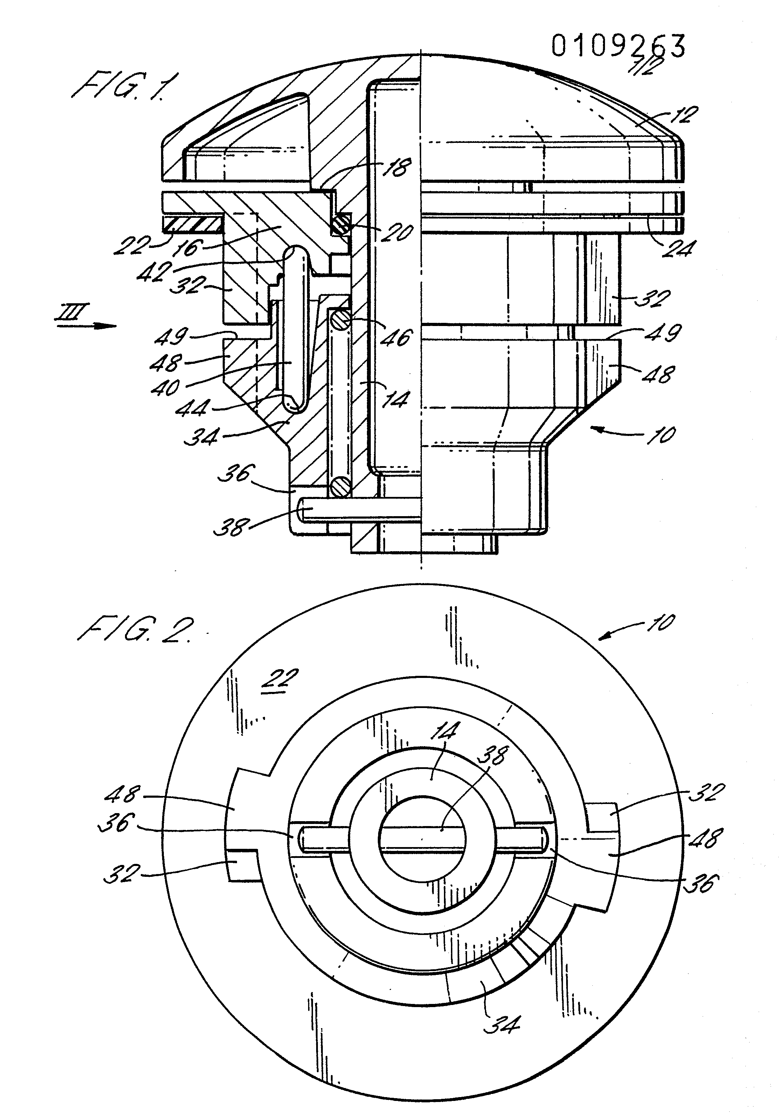

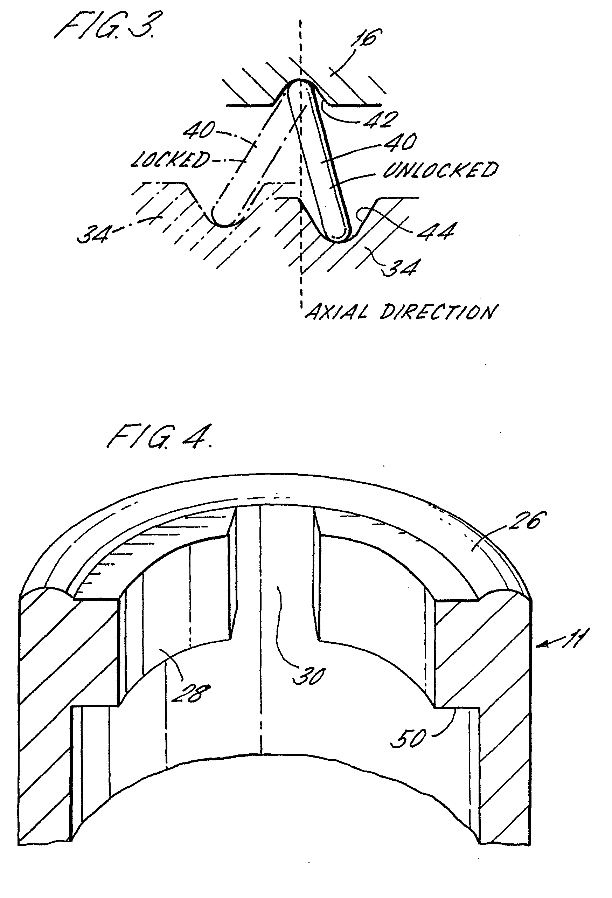

Referring to the drawings, a cap for a motor vehicle fuel filler pipe 11, shown in Figure 4, is indicated generally by the reference numeral 10 in Figures 1 and 2. The cap 10 comprises a domed plastics knob 12 from which extends a drive spigot 14 which may be integral with the knob 12 or a separate moulding welded thereto.

The spigot 14 carries an annular intermediate member 16 of plastics which is free to rotate within limits on the spigot 14. The spigot 14 and intermediate member 16 are provided with complementary thrust faces engaging at 18 and further features which house an O-ring 20 to provide a seal between the spigot and intermediate member.

The intermediate member 16 carries an annular gasket 22 abutting a shoulder 24 of the intermediate member and arranged to seal against the end 26 of the pipe 11.

The pipe end, which is also a plastics moulding, has an inturned flange 28 and a pair of opposed cut-outs 30 are formed in the flange.

The intermediate member 16 has a pair of opposed radially outwardly directed keys 32 arranged to engage the cut-outs 30 in the pipe flange 28.

The spigot 14 also carries a annular locking member 34 which can slide along the spigot 14 but is prevented from rotation relative to the spigot. To this end, the locking member has a pair of opposed axially extending slots 36 which are engaged by a metal pin 38 extending transversely through and secured to the spigot 14.

A spring-loaded over-centre action is provided between the locking member 34 and the intermediate member 16. Three metal pins 40 with rounded ends are equally spaced around the spigot. Each pin 40 has one end engaging a respective socket 42 in the intermediate member 16 and the other end engaging a respective socket 44 in the locking member 34. A helical coil compression spring 46 is disposed in an annular cavity formed between the spigot 14 and the locking member 34. One end of the spring 46 bears on the transverse pin 38 and the other end bears against a shoulder formed on the locking member, and the spring 46 acts, inter alia, to hold the pins 40 in engagement with the sockets 42, 44.

Suitable stops are provided between the intermediate member 16 and the knob 12 or spigot 14 or locking member 34, so that the intermediate member can be rotated between two positions relative to the locking member 34, in one of which positions all of the pins 40 are inclined one way around the spigot 14 and in the other position are all inclined the other way around the spigot 14. As the knob 12 is turned relative to the intermediate member 16 between these two positions, the over-centre action of the pins 40 causes the locking member 34 to move axially away from and then return towards the intermediate member 16.

A pair of opposed radially outwardly directed locking projections 48 are provided on the locking member 34. In one position of the intermediate member 16 relative to the locking member (an "unlocked" position) each locking projection 48 is aligned with a respective one of the keys 32 and the cap 10 can be fitted to the pipe 11, the locking projections 48 passing through the flange cut-outs 30 and the keys 32 engaging in the cut-outs 30. When inserted, the upper surfaces 49 of the locking projections 48 are at a level slightly below the lower surface 50 of the pipe flange 28.

As can be seen from Figure 3, the over-centre action is arranged so that the pins 40 are further over centre in the locked position than in the unlocked position and thus the spacing between the intermediate member 16 and the locking member is less in the locked position than in the unlocked position.

0109263

Upon rotation of the knob 12, the locking member 34 rotates, but the intermediate member is prevented from rotation by the keys 32 engaging the flange cut-outs 30 and so that over-centre action operates. This causes the locking projections 48 initally to move axially away from the flange surface 50 as they rotate under the flange surface until the centre position of the over-centre action is reached. Upon further rotation, which is assisted or caused by the spring 46 the projections 48 rotate and move axially towards and into engagement with the flange. The cap and pipe are arranged so that the action of the spring 46 causes the gasket 22 to be compressed to form a good seal as the over-centre action reaches its stop in the locked position.

The cap is easy to fit to and remove from the pipe, particularly because during fitting of the cap the locking projections 48 forcefully engage the pipe flange 28 only towards the end of the locking movement, when the spring 46 is assisting the locking movement, and during removal of the cap the projections 48 are initially urged away from the flange 28 by the action of the pins 40.

The cap may be modified. For example, the locking member 34 may be formed as two parts, one being fixed to the spigot 14 and the other being slidable on the spigot with a sliding dog connection to the first part. Also, only one of the keys 32 on the intermediate member 16 need be provided to register the intermediate member 16 with the pipe end 11. A key operated lock assembly may be utilised to prevent unauthorised removal of the cap 10 from the pipe 11.

The same principles of using a spring-loaded over-centre action may be applied to a cap arranged to fit a pipe end having an out-turned flange such as on a standard vehicle radiator filler neck, but without the need for a camming feature provided on the out-turned flange on the filler neck.

CLAIMS

1.    A closure for a flanged pipe end with at least two cut-aways in the flange, the closure including two members (16, 34) which are relatively rotatable and are movable towards and away from each other along the axis of rotation, means (46) to bias the members towards each other, means (40) to force the members apart against the biasing means upon rotation of the members from a first relative position, and means to hold the members in a second position of relative rotation, one of the members (16) being provided with sealing means (22) engageable with the pipe end and having means (32) to register said one member (16) with the pipe end, and the other member having at least two projections (48) arranged so that upon offering up the closure to the pipe end with the members in said second relative position the two projections (48) can pass through the two cut-aways and the registering means engages the pipe end, and so that upon subsequent rotation of said other member (34) the projections (48) move behind the flange and the members (16, 34) move towards each other under the action of the biasing means (46) as the members approach said first relative position so that the projections (48) engage and are urged against the flange and the sealing means (22) is urged against the pipe end.

2.    A closure as claimed in Claim 1, wherein the means (40) to force the members (16, 34) apart upon rotation from said first relative position permits the members to move towards each other under the action of the biasing means (46) as the members approach said second relative position so that the holding means is provided by the biasing means (46) urging the members (16, 34) towards said second relative position.

3.    A closure as claimed in Claim 1 or 2, wherein the two members (16, 34) are more closely spaced in said first position than in said second position.

4.  · A closure as claimed in any preceding claim, wherein said means to force the members apart comprises a plurality of pins (40) spaced around the axis, the ends of each pin engaging in respective sockets (42, 44) in said first member (16) and said second member (34).

5.    A closure as claimed in Claim 4 wherein the ends of the pins (40) are held in engagement with their respective sockets (42, 44) by the biasing means (40).

6.    A closure as claimed in any preceding claim, further including a spigot (14) extending along said axis, said one member (16) being mounted on the spigot (14) for rotation and the other member (34) being mounted on the spigot (14) for axial sliding movement.

7.    A closure as claimed in Claim 6, wherein a manually graspable grip (12) is provided on the spigot (14) by which the spigot and said other member (34) can be rotated.

8.    A closure as claimed in any preceding claim, wherein said registering means comprises at least one key (32) carried by said one member (16), said one key being engageable in one of the flange cut-aways.

9.    A combination of a closure as claimed in any preceding claim and a flanged pipe end which the closure is adapted to fit.

FIG.1

0109263

FIG.2.

0109263

FIG. 3.

16

40 LOCKED

42

40 UNLOCKED

34

44

34

AXIAL DIRECTION

FIG. 4.

26

28

30

11

50

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | DE-A-2 312 125  (YMOS)<br>* Whole document *<br><br>--- | 1,8,9 | B 65 D  51/00 |
| P,A | EP-A-0 080 624  (REUTTER)<br><br>* Whole document *<br><br>--- | 1,3,8,9 | |
| A | GB-A-2 070 577  (DAIMLER-BENZ)<br><br>* Whole document *<br><br>----- | 1,3,8,9 | |

| TECHNICAL FIELDS SEARCHED (Int. Cl. ³) |
|---|
| B 65 D |

The present search report has been drawn up for all claims

| Place of search | Date of completion of the search | Examiner |
|---|---|---|
| THE HAGUE | 13-02-1984 | MARTIN A. |

EPO Form 1503 03 82